# EUROPEAN PATENT APPLICATION

(11) **EP 4 624 029 A1**
(43) Date of publication of application: **01.10.2025**
(21) Application number: 24807049.2
(22) Date of filing: 30.04.2024
(51) Int. Cl.: B01D 71/52, B01D 53/22, B01D 69/00, B01D 69/02, B01D 69/10, B01D 69/12, B01D 71/02, B01D 71/10, B01D 71/70, B32B 27/00

(54) **POLYMER COMPOSITE THIN FILM, GAS SEPARATION BODY PROVIDED WITH POLYMER COMPOSITE THIN FILM, GAS SEPARATION DEVICE PROVIDED WITH POLYMER COMPOSITE THIN FILM, AND METHOD FOR MANUFACTURING POLYMER COMPOSITE THIN FILM**

(30) Priority: 15.05.2023 JP 2023079804
(71) Applicant: NanoMembrane Technologies, Inc., Fukuoka-shi, Fukuoka 813-0017 (JP)
(72) Inventor: KUNITAKE, Toyoki, Fukuoka-shi, Fukuoka 819-0388 (JP); FUJIKAWA, Shigenori, Fukuoka-shi, Fukuoka 819-0388 (JP); ARIYOSHI, Miho, Fukuoka-shi, Fukuoka 819-0388 (JP)
(74) Representative: Schumacher & Willsau
(86) International application number: PCT/JP2024/016718
(87) International publication number: WO 2024/237095

(57) **Abstract**

[TASK] To provide a polymer composite thin film that has high permeance and selectivity for a predetermined gas and has practical structural stability by combining two polymer thin films having different properties or by further combining reinforcement material (reinforcement layer).

[SOLUTION] A polymer composite thin film 1 is composed of a first polymer thin film 2 having selective permeability for a predetermined gas and a second polymer thin film 3 that is provided to overlap the first polymer thin film 2 and contains at least an oxyethylene chain.

## Description

### TECHNICAL FIELD

The present invention mainly relates to a polymer composite thin film that contains polymer material, and particularly relates to a polymer composite thin film having high functionality and considerably improved film strength, a gas separation body and a gas separation device provided with this polymer composite thin film, and a manufacturing method for a polymer composite thin film.

### BACKGROUND ART

Recently, an increase of CO₂ concentration in the atmosphere has been pointed out as a cause of climate change and global warming. In view of such a situation, development of direct air capture (DAC) technology for directly capturing CO₂ in the atmosphere and storing it safely and permanently is strongly demanded so that a net reduction of the CO₂ concentration in the air is achieved.

In relation to DAC, technology of air separation for separating gas components such as O₂, N₂, CO₂, or the like contained in the atmosphere as necessary for practical use is known (for example, see "Air Separation: Materials, Methods, Principles and Applications - An Overview D Hazel and N Gobi Chem. Sci. Rev. Lett. 2017, 6(22), 864-8731").

As the air separation technology, specifically, cryogenic distillation that cools a mixture that is gas at normal temperature into a liquid or solid state and separates the components by distillation or the like, pressure swing adsorption (PSA) that causes an adsorbent to adsorb a specific gas under pressurization or under normal pressure, removes the components that are not adsorbed, and reduces the pressure to desorb the adsorbed gas, and solid adsorption method that causes a solid adsorbent, such as activated carbon or zeolite, to adsorb CO₂ and thereafter desorbs CO₂ by reducing the pressure or by heating are known.

Each of these methods has a problem that the energy consumption for gas separation is large and the processing cost is large. Here, gas separation with a polymer thin film has been discussed widely as means for creating DAC technology or air separation technology that in principle consumes a small amount of energy and is economically advantageous.

Regarding the technology related to gas separation films, there is known a gas separation membrane which includes a support layer and a selective polymer layer disposed on the support layer, wherein the support layer contains a gas-permeable polymer and hydrophilic additives dispersed in the gas-permeable polymer, and the selective polymer layer contains a selective polymer matrix and carbon nanotubes dispersed in the selective polymer matrix. (Patent Document 1)

### PRIOR ART DOCUMENT(S)

### PATENT DOCUMENT(S)

Patent Document 1: JP2020-531260A

### DISCLOSURE OF THE INVENTION

### TASK TO BE ACCOMPLISHED BY THE INVENTION

In the technology described in Patent Document 1, the CO₂ permeance of the membrane provided with a selective polymer layer that contains carbon nanotubes (Examples 2B to 2D) is 617 to 807 GPU under reduced pressure, and the CO₂/N₂ selection ratio is 161 to 187. The difference from Example 2A which does not contain carbon nanotubes in the selective polymer layer (under reduced pressure, the CO₂ permeance is 473 GPU and the CO₂/N₂ selection ratio is 194) is attributed to that due to addition of carbon nanotubes, the mechanical strength of the selective polymer layer was improved, and it was prevented from being dragged into the pores of the support layer which is a nanoporous base material (see Patent Document 1, [Table 13], etc.).

However, though Patent Document 1 suggests that carbon nanotubes improve the mechanical strength of the selective polymer layer, there is no suggestion that the addition of carbon nanotubes can make the selective polymer layer thinner and improve the gas permeance. Indeed, in Patent Document 1, it is considered important that "the selective polymer layer is not dragged into the pores of the support layer," and thinning the selective polymer layer would make it easier for the selective polymer layer facing the pores to be dragged into the pores and would increase the risk of rupture of the membrane, and thus, there is no motivation for positively making the layer thinner.

The present invention has been made to solve such prior art problems, and an object thereof is to provide a polymer composite thin film which, due to a configuration in which two polymer thin films having different properties are combined or in which reinforcement material is further combined (composited), has high permeance and selectivity for a predetermined gas and has practical structural stability (self-supporting property), a gas separation body provided with the polymer composite thin film, a gas separation device provided with the polymer composite thin film, and a manufacturing method for the polymer composite thin film.

### MEANS TO ACCOMPLISH THE TASK

The present invention which is made to solve the problems is a polymer composite thin film composed of a first polymer thin film having selective permeability for a predetermined gas, and a second polymer thin film that is provided to overlap the first polymer thin film and contains at least an oxyethylene chain.

Thereby, it becomes possible to obtain a polymer composite thin film provided with a good balance of gas permeability and gas selectivity by combining two polymer thin films having different properties.

Also, according to the present invention, carbon nanotubes or cellulose nanofibers are dispersed in the second polymer thin film. Thereby, it becomes possible to increase the mechanical strength of the second polymer thin film and to make the polymer composite thin film thinner.

Also, according to the present invention, carbon nanotubes or cellulose nanofibers are dispersed in the first polymer thin film. Thereby, it becomes possible to increase the mechanical strength of the first polymer thin film and to make the polymer composite thin film thinner.

Also, according to the present invention, the polymer composite thin film comprises a reinforcement layer composed of carbon nanotubes or cellulose nanofibers between the first polymer thin film and the second polymer thin film. Thereby, it becomes possible to increase the mechanical strength of the polymer composite thin film including the reinforcement layer and to make the polymer composite thin film thinner.

Also, according to the present invention, the second polymer thin film is composed of a cross-linked polymer that contains the oxyethylene chain. Thereby, physical properties of the second polymer thin film become stable, and it becomes possible to suppress rupture or the like of the polymer composite thin film including the second polymer thin film.

Also, according to the present invention, the cross-linked polymer that contains the oxyethylene chain is in a partially cross-linked state. Thereby, it becomes possible to ensure the gas permeability of the second polymer thin film.

Also, according to the present invention, a total of a film thickness of the first polymer thin film and a film thickness of the second polymer thin film is 20 nm to 1000 nm. Thereby, it becomes possible to obtain a polymer composite thin film 1 provided with a self-supporting property and having high gas permeability and high gas selectivity.

Also, according to the present invention, the polymer composite thin film selectively allows carbon dioxide and oxygen to permeate from air, exhaust gas, or other mixture gas. Thereby, carbon dioxide concentration, oxygen enrichment, and nitrogen enrichment become possible.

Also, according to the present invention, the first polymer thin film is mainly composed of polysiloxane. Thereby, it becomes possible to manufacture the polymer composite thin film at a lower cost by using a common material that is easily available.

Also, the present invention provides a gas separation body comprising: a polymer composite thin film; and a support body that supports the polymer composite thin film. Thereby, it is possible to configure the gas separation body by superimposing (transferring) the polymer composite thin film on the support body.

Also, the present invention provides a gas separation device comprising: a gas separation body; and a gas supplying unit that supplies gas to the gas separation body. Thereby, it becomes possible to provide a gas separation device for obtaining oxygen enriched air, carbon dioxide concentrated air, and nitrogen enriched air.

Also, according to the present invention, the gas supplying unit supplies the gas such that the gas permeates in order of the second polymer thin film and the first polymer thin film. Thereby, it becomes possible to obtain oxygen enriched air, carbon dioxide concentrated air, and nitrogen enriched air by using the polymer composite thin film that is excellent in gas selectivity.

Also, according to the present invention, the gas supplying unit supplies the gas such that the gas permeates in order of the first polymer thin film and the second polymer thin film. Thereby, it becomes possible to obtain oxygen enriched air, carbon dioxide concentrated air, and nitrogen enriched air with high efficiency by using the polymer composite thin film that is excellent in gas permeability.

Also, the present invention provides a manufacturing method for a polymer composite thin film, the manufacturing method comprising: a first step of preparing an oxyethylene chain-containing polymer solution and preparing a polymer material-containing solution that contains polymer material which has selective permeability for a predetermined gas when formed into a thin film; a second step of forming a second polymer thin film by applying the oxyethylene chain-containing polymer solution onto a base material formed with a sacrificial layer such that the oxyethylene chain-containing polymer solution covers the sacrificial layer; a third step of cross-linking the second polymer thin film; a fourth step of forming a first polymer thin film by applying and curing the polymer material-containing solution so as to cover the second polymer thin film after cross-linking; and a fifth step of peeling off a polymer composite thin film composed of the first polymer thin film and the second polymer thin film from the base material by dissolving the sacrificial layer.

Thereby, it becomes possible to manufacture a polymer composite thin film provided with a good balance of gas permeability and gas selectivity by combining two polymer thin films having different properties.

### EFFECT OF THE INVENTION

As described above, according to the present invention, it becomes possible to obtain a polymer composite thin film which, due to a configuration in which two polymer thin films having different characteristics are combined or in which reinforcement material is further combined (composited), has high permeance and selectivity for a predetermined gas and has practical structural stability (self-supporting property), a gas separation body provided with the polymer composite thin film, a gas separation device provided with the polymer composite thin film, and a manufacturing method for the polymer composite thin film.

### BRIEF DESCRIPTION OF THE DRAWINGS

[Figure 1] (a) and (b) are explanatory diagrams each showing a configuration of a polymer composite thin film 1 according to the first embodiment of the present invention and a gas separation body 6 including the polymer composite thin film 1

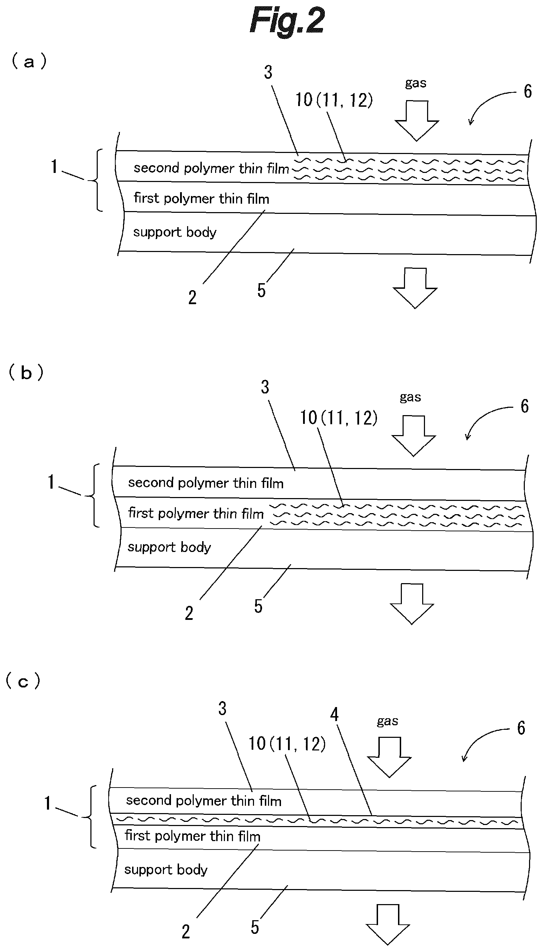

[Figure 2] (a) is an explanatory diagram showing a configuration of a polymer composite thin film 1 according to the second embodiment of the present invention and a gas separation body 6 including the polymer composite thin film 1, (b) is an explanatory diagram showing a configuration of a polymer composite thin film 1 according to the third embodiment of the present invention and a gas separation body 6 including the polymer composite thin film 1, and (c) is an explanatory diagram showing a configuration of a polymer composite thin film 1 according to the fourth embodiment of the present invention and a gas separation body 6 including the polymer composite thin film 1
[Figure 3] An explanatory diagram showing a configuration of a gas separation device 110 provided with a gas separation body 6 according to the present invention

### MODE(S) FOR CARRYING OUT THE INVENTION

### (First Embodiment)

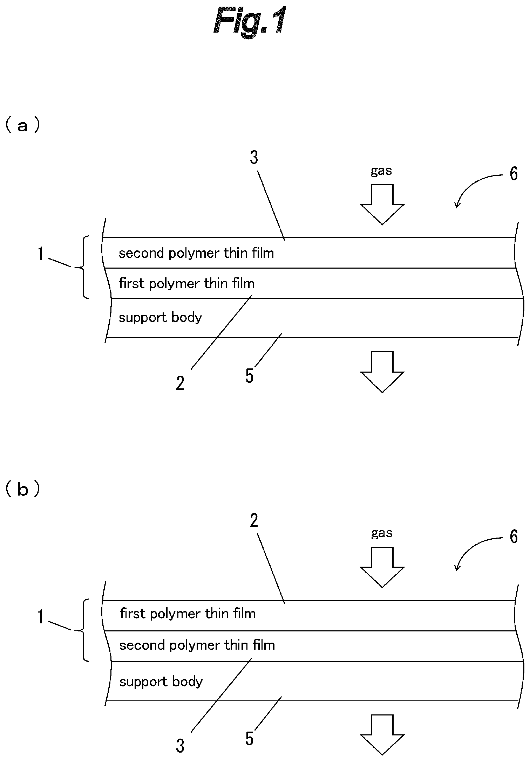

Figures 1(a) and 1(b) are explanatory diagrams each showing a configuration of a polymer composite thin film 1 according to the first embodiment of the present invention and a gas separation body 6 including the polymer composite thin film 1. The gas separation body 6 is composed of the polymer composite thin film 1 and a support body 5. The polymer composite thin film 1 is composed of a first polymer thin film 2 having selective permeability for a predetermined gas and a second polymer thin film 3 that contains at least an oxyethylene chain. The second polymer thin film 3 and the first polymer thin film 2 are each a non-porous body, and they overlap and contact each other. The gas separation body 6 may be configured such that the first polymer thin film 2 contacts the support body 5 as shown in Figure 1(a) or may be configured such that the second polymer thin film 3 contacts the support body 5 as shown in Figure 1(b).

As the material composing the first polymer thin film 2, for example, vinyl polymer, polysiloxane, or a cross-linkable polymer may be used, and particularly, polydimethylsiloxane (hereinafter referred to as "PDMS") can be preferably used. It is to be noted here that with a film thickness of 10 nm or less, for example, a membrane of vinyl polymer or polysiloxane by itself has low mechanical strength and cannot ensure a self-supporting property. In this case, by adding reinforcement material 10 to the first polymer thin film 2 which contains vinyl polymer or polysiloxane as a main component, for example, or by superimposing a reinforcement layer 4 onto the first polymer thin film 2, it becomes possible to achieve both functionality and self-supporting property, as described later.

On the other hand, a cross-linkable polymer has a self-supporting property by itself even with a film thickness (for example, 100 nm or less) capable of effectively exerting the functionality. Here, a cross-linkable polymer (cross-linked polymer) is a polymer provided with a three-dimensional mesh structure (cross-linked structure) by connecting multiple linear polymer chains by chemical reaction and contains, for example, radical cross-linking of linear polymers or the like, or epoxy resin in which epoxy groups and amino groups as functional groups are cross-linked by chemical reaction.

Note that regarding epoxy resin, an example of a polymer thin film configured to have a film thickness of 20 nm and provided with a self-supporting property is described in "A Large, Freestanding, 20 nm Thick Nanomembrane Based on an Epoxy Resin, H. Watanabe T. Kunitake, ADVANCED MATERIALS Volume19, Issue7, Pages 909-912, 2007."

### (https: //onlinelibrary.wiley.com/doi/abs/10.1002/adma.200601630)

As the material composing the second polymer thin film 3, a compound that contains an oxyethylene chain can be preferably used. The oxyethylene chain has gas separation properties irrespective of whether it is contained in the main chain or in the side chain of the polymer. Polymer materials that contain an oxyethylene chain in the main chain include polyethylene glycol diacrylate (Poly (ethylene glycol) Diacrylate) (hereinafter may be referred to as "PEGDA"), polyethylene glycol dimethacrylate, polyethylene glycol, and poly(ethylene oxide).

Also, polymer materials that contain an oxyethylene chain in the side chain include, for example, poly(ethylene glycol) methyl ether acrylate (hereinafter may be referred to as "PEGMA") and poly(ethylene glycol) methyl ether methacrylate. Particularly, the acrylate mentioned as an example is preferable because it can be easily made to have a high molecular weight and various acrylates can be arbitrarily combined. These polymer materials may be made to have high molecular weights after being mixed or may be mixed after each material is made to have a high molecular weight. Here, in a case where PEGMA and PDGDA are mixed, the volume ratio is preferably in a range where PEGMA : PEGDA is 10 : 0 to 5 : 5. The compound that contains an oxyethylene chain may be any of so-called main chain type, side chain type, or star type, and ethylene oxide polymer which easily undergoes cross-linking by radical reaction is included therein.

Acrylate, which is polymer raw material, can be easily made to have a high molecular weight by using a polymerization initiator. The method for making acrylate have a high molecular weight is not particularly limited but, for example, it is possible to make the reaction proceed by using benzoyl peroxide and heating. Also, for example, it is possible to make the reaction proceed by using 1-hydroxycyclohexyl phenyl ketone and irradiating light.

Also, polyallylamine, polyethyleneimine or the like may be added as the material composing the second polymer thin film 3. In this case, the amount of polyallylamine or the like added is preferably about 10 wt% relative to PEGMA.

The first polymer thin film 2 which is mainly composed of vinyl polymer or polysiloxane has excellent gas permeability, and particularly, the thinner it is, the higher the gas permeability becomes. Also, the first polymer thin film 2 has selectivity for predetermined gases (CO₂, O₂), but CO₂/N₂ remains at about 10. On the other hand, the second polymer thin film 3 which contains the oxyethylene chain has excellent gas separation performance (selectivity) and particularly CO₂/N₂ is high. However, to maintain sufficient gas permeability, it is necessary to make it as thin as possible and further (or alternatively) to lower the degree of cross-linking. Thus, by combining the first polymer thin film 2 and the second polymer thin film 3 which have different characteristics (selectivity) (compositing two types of polymer layers), the polymer composite thin film 1 having both excellent gas permeability and excellent gas selectivity is obtained.

Here, the total of the film thickness of the first polymer thin film 2 and the film thickness of the second polymer thin film 3 is preferably 10 nm to 2 µm, and more preferably 20 nm to 1000 nm from the viewpoint of ensuring the CO₂ permeance of about 1000 GPU (the same applies to the second embodiment to the fourth embodiment). Note that in the first embodiment, it is more preferable that the film thickness of the first polymer thin film 2 is 30 nm or more (for example, 120 to 1300 nm) and the film thickness of the second polymer thin film 3 is 10 nm or more (for example, 18 to 113 nm) from the viewpoint that the polymer composite thin film 1 as a whole is provided with a self-supporting property.

As the support body 5, for example, a polyacrylonitrile (hereinafter may be referred to as "PAN") layer having a large number of fine pores and provided with high gas permeance, or a porous PAN membrane composed as a composite membrane having the PAN layer on the top surface may be used. Also, as the support body 5, an alumina sheet processed to have many pores by anodization (product example: Anodisc) may be used. Besides, so-called membrane filters such as polyethersulfone, polycarbonate, polyimide, etc. may be used.

When a predetermined gas (here, air) is supplied to the gas separation body 6 which includes the first polymer thin film 2 and the second polymer thin film 3, carbon dioxide (CO₂) and oxygen (O₂) in the air selectively permeate more (the same applies to the second embodiment to the fourth embodiment). Thereby, it is possible to effectively capture CO₂ from the air or to increase the concentration of O₂.

In the following, a manufacturing process for the polymer composite thin film 1 according to the first embodiment and the gas separation body 6 provided with the polymer composite thin film 1 will be described.

### <Advance Preparation>

As an advance preparation for obtaining an oxyethylene chain-containing polymer solution that contains an oxyethylene chain, first, an operation of polymerizing PEGMA which is a monomer is performed. An oxyethylene chain-containing polymer is formulated by radical polymerization of PEGMA. Toluene is used as a reaction solvent, and after the polymerization reaction, reprecipitation operation using hexane is performed and the precipitate is dried, whereby a powder of polymerized PEGMA (hereinafter may be referred to as "P(PEGMA)") is obtained.

### <First Step>

The first step is a step of preparing an oxyethylene chain-containing polymer solution that contains an oxyethylene chain and preparing a polymer material-containing solution that contains polymer material which has selective permeability for a predetermined gas when formed into a thin film. Note that "prepare" in the first step includes formulation or procuring commercially available products. Here, an oxyethylene chain-containing polymer solution in which the powder of P(PEGMA) and a photopolymerization initiator are dissolved in a predetermined solvent and a PDMS formulation liquid (polymer material-containing solution) in which PDMS, a PDMS curing agent, and a solvent are mixed at predetermined ratios are formulated. Note that the photopolymerization initiator may be contained in a range of 0.01 to 20 wt% relative to P(PEGMA). As the solvent for formulating the oxyethylene chain-containing polymer solution, ethanol, toluene, xylene, or mixed solvent of ethanol and water can be used, for example. Also, as the solvent for formulating the polymer material-containing solution, hexane, toluene, or cyclohexane can be used, for example.

### <Second Step>

The second step is a step of forming the second polymer thin film 3 by applying the oxyethylene chain-containing polymer solution onto a base material formed with a sacrificial layer such that the oxyethylene chain-containing polymer solution covers the sacrificial layer. First, the sacrificial layer is formed by applying a water-soluble polymer onto a cleaned glass substrate (hereinafter may be referred to as "the base material") by spin coating. Next, the second polymer thin film 3 is formed by applying, by spin coating, the oxyethylene chain-containing polymer solution prepared in the first step so as to cover the sacrificial layer.

### <Third Step>

The third step is a step of cross-linking the second polymer thin film 3. As described above, the oxyethylene chain-containing polymer solution contains the photopolymerization initiator, and by performing UV (ultraviolet light) irradiation, cross-linking starts and progresses. Namely, the second polymer thin film 3 is composed of a cross-linked polymer (a polymer layer in which P(PEGMA) chains which are linear polymer chains are cross-linked to each other) that contains the oxyethylene chain.

Note that cross-linking is preferably performed in nitrogen atmosphere (in O₂-excluded atmosphere). Thereby, polymerization inhibition by O₂ can be prevented. Also, it is preferred to stop the progress of cross-linking while the second polymer thin film 3 is in a rubber state (namely, a state in which entropy elasticity is maintained or a state in which functional groups contributing to the cross-linking reaction remain in the second polymer thin film 3) by controlling the UV irradiation time (or energy). In this case, the cross-linked polymer that contains the oxyethylene chain composes the second polymer thin film 3 in a partially cross-linked state.

With the second polymer thin film 3 in a rubber state, when the polymer composite thin film 1 is separated from the base material in the fifth step described later, dissolving of the second polymer thin film 3 in water can be suppressed. Namely, by cross-linking P(PEGMA) chains, physical properties of the second polymer thin film 3 become stable, and it becomes possible to manufacture the polymer composite thin film 1 including the second polymer thin film 3 without rupture or the like. Further, by stopping the progress of cross-linking in the rubber state (achieving a partially cross-linked state), it becomes possible to ensure gas permeability of the second polymer thin film 3.

### <Fourth Step>

The fourth step is a step of forming the first polymer thin film 2 by applying and curing the PDMS formulation liquid, namely, the polymer material-containing solution, so as to cover the second polymer thin film 3 after cross-linking. With the spin coating, the polymer material-containing solution (PDMS formulation liquid) prepared in the first step is applied so as to cover the second polymer thin film 3 after cross-linking and further is cured.

### <Fifth Step>

The fifth step is a step of peeling off the polymer composite thin film 1 composed of the first polymer thin film 2 and the second polymer thin film 3 from the base material by dissolving the sacrificial layer. By the above-described steps, the sacrificial layer, the second polymer thin film 3, and the first polymer thin film 2 are formed on the base material in order of closest to the base material. By immersing the base material formed with the polymer composite thin film 1 in water and dissolving the sacrificial layer in water, the polymer composite thin film 1 is peeled off from the base material.

Then, by transferring the polymer composite thin film 1 that has been peeled off from the base material onto the support body 5, the gas separation body 6 is obtained. When transferring, the configuration shown in Figure 1(a) or the configuration shown in Figure 1(b) may be selected. As described later, in the gas separation body 6, the gas separation properties are different between when the gas is caused to permeate in order from the first polymer thin film 2 to the second polymer thin film 3 and when the gas is caused to permeate in order from the second polymer thin film 3 to the first polymer thin film 2, and the user can select the configuration of the gas separation body 6 depending on necessary characteristics.

### Example 1

Following the above-described steps, first, an oxyethylene chain-containing polymer solution in which P(PEGMA) and a photopolymerization initiator were dissolved in ethanol such that the content of P(PEGMA) was 0.05 g/mL and the content of the photopolymerization initiator was 0.0005 g/mL was formulated.

A PDMS formulation liquid (polymer material-containing solution) in which polydimethylsiloxane, hydroxy terminated (PDMS), trimethoxy(methyl)silane, and diiso-propoxybis(ethyl acetoacetate)titanium were dissolved in hexane such that the content of polydimethylsiloxane, hydroxy terminated was 0.038 g/mL, the content of tri-methoxy(methyl)silane was 0.0016 g/mL, and the content of diisopropoxybis(ethyl acetoacetate)titanium was 0.0008 g/mL was formulated.

On the base material formed with a sodium polystyrene sulfonate (hereinafter may be referred to as "PSS") layer (sacrificial layer), the oxyethylene chain-containing polymer solution made by the above-described operation was applied by spin coating (3000 rpm / 1 minute). Thereafter, the base material was placed still in N₂ atmosphere for 30 minutes. Thereafter, by performing UV irradiation in the same atmosphere, the second polymer thin film 3 was formed.

Next, the PDMS formulation liquid made by the above-described operation was applied by spin coating (3000 rpm / 1 minute) so as to cover the second polymer thin film 3. Thereafter, the base material was placed still in the atmospheric air for one day, whereby PDMS was cured and the first polymer thin film 2 was formed.

Next, the polymer composite thin film 1 was peeled off from the base material by immersing the base material in water and dissolving the sacrificial layer. Then, the polymer composite thin film 1 was transferred onto the support body 5 in the manner that the first polymer thin film 2 of the polymer composite thin film 1 contacted the support body 5, whereby the gas separation body 6 was obtained.

### Example 2

With the exception that an oxyethylene chain-containing polymer solution with the content of P(PEGMA) being 0.04 g/mL and the content of the photopolymerization initiator being 0.0004 g/mL was used, the polymer composite thin film 1 and the gas separation body 6 were formed under the same conditions as in Example 1.

### Example 3

With the exception that an oxyethylene chain-containing polymer solution with the content of P(PEGMA) being 0.03 g/mL and the content of the photopolymerization initiator being 0.0003 g/mL was used, the polymer composite thin film 1 and the gas separation body 6 were formed under the same conditions as in Example 1.

### Example 4

With the exception that an oxyethylene chain-containing polymer solution with the content of P(PEGMA) being 0.005 g/mL and the content of the photopolymerization initiator being 0.00005 g/mL and a PDMS formulation liquid with the content of PDMS being 0.076 g/mL were used, the polymer composite thin film 1 and the gas separation body 6 were formed under the same conditions as in Example 1.

### Example 5

With the exception that an oxyethylene chain-containing polymer solution with the content of P(PEGMA) being 0.005 g/mL and the content of the photopolymerization initiator being 0.00005 g/mL and a PDMS formulation liquid with the content of PDMS being 0.114 g/mL were used, the polymer composite thin film 1 and the gas separation body 6 were formed under the same conditions as in Example 1.

### Example 6

With the exception that an oxyethylene chain-containing polymer solution with the content of P(PEGMA) being 0.01 g/mL and the content of the photopolymerization initiator being 0.0001 g/mL and a PDMS formulation liquid with the content of PDMS being 0.2 g/mL were used, the polymer composite thin film 1 and the gas separation body 6 were formed under the same conditions as in Example 1.

### (Comparative Example)

In the following, a comparative example will be described. As in Example 1, a PDMS formulation liquid was obtained. The base material was O₂ plasma cleaned, and the PSS aqueous solution (15 wt%) was applied on the base material by spin coating (3000 rpm / 1 minute) to form a sacrificial layer, which was thereafter dried by heating.

Next, the PDMS formulation liquid was applied by spin coating (3000 rpm / 1 minute) so as to cover the sacrificial layer. Thereafter, the base material was placed still in the atmospheric air for one day, whereby PDMS was cured. Next, the polymer thin film was peeled off from the base material by immersing the base material in water and dissolving the sacrificial layer. Then, the PDMS thin film was transferred onto the support body 5, whereby the gas separation body 6 was obtained. The polymer thin film of the comparative example may be hereinafter referred to as "the PDMS thin film." Note that the PDMS thin film corresponds to the first polymer thin film 2 described above.

In the following, [Table 1] shows, regarding Example 1 to Example 6 and the comparative example, presence or absence of self-supporting property, the film thickness of the first polymer thin film 2, the film thickness of the second polymer thin film 3, the CO₂ permeance, the N₂ permeance, the O₂ permeance, and the selection ratios CO₂/N₂, O₂/N₂, and CO₂/O₂. Note that the film thicknesses of the first polymer thin film 2 and the second polymer thin film 3 are results of forming multiple gas separation bodies 6 under the same conditions and observing the cross sections of the polymer composite thin films 1 with a scanning electron microscope (SEM), and the gas permeances are results of performing gas permeability tests by causing the gases to permeate the gas separation body 6 in order from the second polymer thin film 3 to the first polymer thin film 2 (the same applies to [Table 3], [Table 4], and [Table 5]). Here, 1 GPU = 3.35 × 10⁻¹⁰ mol·m⁻²·s⁻¹·Pa⁻¹.

Note that in the gas permeability tests, specifically, CO₂ gas, N₂ gas, and O₂ gas of a constant pressure were individually supplied to the gas separation body 6, and an amount of volume that permeated the second polymer thin film 3 and the first polymer thin film 2 having a membrane area of 0.785 cm² was measured with a soap film flow meter.

**[Table 1]**

| | **self-supporting property** | **film thickness of first polymer thin film 2 [nm]** | **film thickness of second polymer thin film 3 [nm]** | **CO2 permeance [GPU]** | **N2 permeance [GPU]** | **O2 permeance [GPU]** | **CO2/N2** | **O2/N2** | **CO2/O2** |
|---|---|---|---|---|---|---|---|---|---|
| **Example** 1 | Yes | 120~150 | 113 | 2837 | 45 | 125 | 63.0 | 2.8 | 22.7 |
| **Example 2** | Yes | 120~150 | 95 | 3196 | 62 | 178 | 51.5 | 2.9 | 18.0 |
| **Example 3** | Yes | 120~150 | 74 | 5459 | 108 | 303 | 50.5 | 2.8 | 18.0 |
| **Example 4** | Yes | 280~310 | 18 | 6239 | 126 | 358 | 49.5 | 2.8 | 17.4 |
| **Example 5** | Yes | 700~760 | 18 | 4201 | 92 | 253 | 45.7 | 2.8 | 16.6 |
| **Example 6** | Yes | 1250~1300 | 43 | 1963 | 49 | 120 | 40.1 | 2.4 | 16.4 |
| **Comparative Example (PDMS thin film)** | Yes | 150 | - | 10662 | 981 | 2075 | 10.9 | 2.1 | 5.1 |

As shown in [Table 1], the polymer composite thin films 1 of Example 1 to Example 6 and the comparative example are each provided with a self-supporting property. Note that presence or absence of self-supporting property is determined according to a criterion whether, when the thin film (film) floating in the peeling liquid after being peeled off from the base material in the peeling liquid is lifted into the air, the film can hold the flat membrane shape by itself without rupture or the like. Namely, if the film holds the membrane structure without rupture even in the air, it is determined that the self-supporting property is "present," and if the film holds the membrane structure in the state floating in the peeling liquid after being peeled off but the film is easily ruptured once it is taken out into the air, it is determined that the self-supporting property is "absent."

In Example 1 to Example 3, the thickness of the first polymer thin film 2 that contains PDMS is substantially the same as that of the PDMS thin film of the comparative example, and it may be considered that Example 1 to Example 3 have a structure in which the second polymer thin film 3 is superimposed on the PDMS thin film of the comparative example. The thinner the film thickness of the second polymer thin film 3 becomes, the higher the gas permeance becomes, but by superimposing the second polymer thin film 3 on the first polymer thin film 2, the film thickness of the polymer composite thin film 1 increases, and due to this, each of the CO₂, N₂, and O₂ permeances is lowered than the comparative example. However, it is seen that the gas selectivity CO₂/N₂ is considerably improved than the comparative example, and O₂/N₂ is also improved.

Also, the second polymer thin film 3 which contains P(PEGMA), namely, the oxyethylene chain, is very soft and vulnerable by itself. However, as shown in Example 4 to Example 6, the second polymer thin film 3 can be configured to be very thin (20 nm or less) by being superimposed on the first polymer thin film 2. Thereby, the membrane as a whole is ensured to have a self-supporting property and can exhibit high gas selectivity.

### Example 7

With the exception that an oxyethylene chain-containing polymer solution with the content of P(PEGMA) being 0.03 g/mL and the content of the photopolymerization initiator being 0.0003 g/mL and a PDMS formulation liquid with the content of PDMS being 0.076 g/mL were used, the polymer composite thin film 1 and the gas separation body 6 were formed under the same conditions as in Example 1.

### Example 8

With the exception that an oxyethylene chain-containing polymer solution with the content of P(PEGMA) being 0.03 g/mL and the content of the photopolymerization initiator being 0.0003 g/mL and a PDMS formulation liquid with the content of PDMS being 0.114 g/mL were used, the polymer composite thin film 1 and the gas separation body 6 were formed under the same conditions as in Example 1.

### Example 9

With the exception that the polymer composite thin film 1 was transferred onto the support body 5 in the manner that the second polymer thin film 3 of the polymer composite thin film 1 contacted the support body 5, the gas separation body 6 was formed under the same conditions as in Example 7.

### Example 10

With the exception that the polymer composite thin film 1 was transferred onto the support body 5 in the manner that the second polymer thin film 3 of the polymer composite thin film 1 contacted the support body 5, the gas separation body 6 was formed under the same conditions as in Example 8.

In the following, [Table 2] shows, regarding Example 7 to Example 10, presence or absence of self-supporting property, the film thickness of the first polymer thin film 2, the film thickness of the second polymer thin film 3, the CO₂ permeance, the N₂ permeance, the O₂ permeance, and the selection ratios CO₂/N₂, O₂/N₂, and CO₂/O₂.

**[Table 2]**

| | **self-supporting property** | **film thickness of first polymer thin film 2 [nm]** | **film thickness of second polymer thin film 3 [nm]** | **CO2 permeance [GPU]** | **N2 permeance [GPU]** | **O2 permeance [GPU]** | **selection ratio CO2/N2** | **selection ratio O2/N2** | **selection ratio CO2/O2** |
|---|---|---|---|---|---|---|---|---|---|
| **Example 7** | Yes | 250~300 | 75 | 4263 | 84 | 244 | 50.8 | 2.9 | 17.5 |
| **Example 8** | Yes | 550~600 | 75 | 2289 | 45 | 138 | 509 | 3.1 | 16.6 |
| **Example 9** | Yes | 250~300 | 75 | 8119 | 402 | 767 | 20.2 | 1.9 | 10.6 |
| **Example 10** | Yes | 550~600 | 75 | 6021 | 297 | 547 | 20.3 | 1.8 | 11.0 |

Here, in Example 7 and Example 8 in which the second polymer thin film 3 contacts the support body 5, the gas permeances are results of performing gas permeability tests by causing the gases to permeate in order from the second polymer thin film 3 to the first polymer thin film 2 (see Figure 1(a)), and in Example 9 and Example 10 in which the first polymer thin film 2 contacts the support body 5, the gas permeances are results of performing gas permeability tests by causing the gases to permeate in order from the first polymer thin film 2 to the second polymer thin film 3 (see Figure 1(b)). It is seen from [Table 2] that in the case where the gases are caused to permeate in order from the second polymer thin film 3 to the first polymer thin film 2, superior gas selectivity is obtained, while in the case where the gas are caused to permeate in order from the first polymer thin film 2 to the second polymer thin film 3, superior gas permeability is obtained.

### (Second Embodiment)

Figure 2(a) is an explanatory diagram showing the configuration of a polymer composite thin film 1 according to the second embodiment of the present invention and a gas separation body 6 including the polymer composite thin film 1. In the second embodiment, the components of the gas separation body 6 are the same as in the first embodiment, but the second embodiment differs from the first embodiment in that in the second embodiment, reinforcement material 10 is dispersed in the second polymer thin film 3. Here, as the reinforcement material 10, carbon nanotubes 11 and cellulose nanofibers 12 can be preferably used. The carbon nanotubes 11 and the cellulose nanofibers 12 have high mechanical strength as a material, and the second polymer thin film 3 in which they are dispersed exhibits high mechanical strength.

As the carbon nanotubes 11, either single-walled carbon nanotubes (SWNTs) or multi-walled carbon nanotubes (MWNTs) may be used (hereinafter may be collectively referred to as "CNTs"). Because of high aspect ratio of CNTs (in SWNTs, the diameter is 0.5 to 3 nm and the length is ~10 µm, and in MWNTs, the diameter is 5 to 100 nm and the length is ~20 µm), they can form a network of tubes, and the mechanical characteristics thereof are obtained by a combination of stiffness, strength, and tensile strength.

The cellulose nanofibers 12 include oxidized cellulose nanofibers, and further, a mixture of the cellulose nanofibers 12 and the oxidized cellulose nanofibers (hereinafter may be collectively referred to as "CNFs") may be used as an organic polymer. CNFs form fibrils which are small fibers (fibrous structure). Fibrils have high mechanical strength as a material, and by dispersing the reinforcement material 10 composed of CNFs in the second polymer thin film 3, very high mechanical strength is exhibited as a whole. Also, CNFs are manufactured at low cost from wood or the like which is abundant as a resource by mechanical defibration or the like, and further, CNFs are an environmentally friendly material because they are plant fibers.

CNTs and CNFs preferably have diameters smaller than the film thickness of the polymer composite thin film 1 (for example, ~200 nm), more preferably have diameters smaller than the film thickness of the second polymer thin film 3 in the first embodiment described above (for example, ~70 nm), and even more preferably have diameters smaller than the film thickness of the second polymer thin film 3 in the second embodiment (for example, ~35 nm). By selecting CNTs and CNFs having diameters smaller than the film thickness of the polymer composite thin film 1, the mechanical strength is improved and the functionality (here, gas permeability and gas selectivity) of the polymer composite thin film 1 as a whole is exerted. Also, by using CNTs and CNFs having diameters smaller than the film thickness of the second polymer thin film 3 (or the first polymer thin film 2), the functionality of the second polymer thin film 3 (the first polymer thin film 2) is sufficiently exerted (the same applies to the third embodiment and the fourth embodiment).

Note that in Figure 2(a), pieces of reinforcement material 10 having the same fiber length are aligned in a specific direction, but this is merely a schematic representation (the same applies to Figure 2(b) and Figure 2(c)). The lengths of CNTs and CNFs vary, and they are oriented in all directions and are contained in the second polymer thin film 3 (the first polymer thin film 2 in Figure 2(b) and the reinforcement layer 4 in Figure 2(c) (hereinafter they may be collectively referred to as "the thin film/layer")) in an entangled state (a tube network or a fiber network). However, by adjusting the amount of CNTs or CNFs added, the distribution of CNTs or CNFs is limited (controlled) so that the density of the network in the thin film/layer becomes very low. This can prevent lowering of the functionality (here, permeability in particular) of the polymer composite thin film 1.

In a low-density network, a first region A1 in which multiple pieces of reinforcement material 10 are present in the thickness direction of the thin film/layer, a second region A2 in which a single piece of reinforcement material 10 is present, and a third region A3 in which no reinforcement material 10 is present are included in a plane A of the network in a mixed manner. This can be rephrased as that a part of the plane formed by the thin film/layer has a region in which multiple pieces of reinforcement material 10 do not overlap each other in the thickness direction of the thin film/layer. Further, when the area of the first region A1 is denoted by S1, the area of the second region A2 is denoted by S2, and the area of the third region A3 is denoted by S3, the thin film/layer is configured such that S1 <S2 <S3. Here, provided that the ratio of S3 occupying the plane A is referred to as a porosity, it is preferred that the porosity exceeds 90 %.

In the following, a manufacturing process for the polymer composite thin film 1 according to the second embodiment and the gas separation body 6 provided with the polymer composite thin film 1 will be described.

### <First Step>

The first step is a step of preparing an oxyethylene chain-containing polymer-reinforcement material-containing solution that contains an oxyethylene chain-containing polymer and reinforcement material 10 and preparing a polymer material-containing solution that contains polymer material which has selective permeability for a predetermined gas when formed into a thin film.

As in the first step of the first embodiment, a photopolymerization initiator in an amount of 1 wt% relative to P(PEGMA) is added to the powder of P(PEGMA), and this is dissolved in a predetermined amount of ethanol, whereby an oxyethylene chain-containing polymer solution is prepared. In the case where the carbon nanotubes 11 are used as the reinforcement material 10, a CNT dispersion is formulated by dispersing the carbon nanotubes 11 in ethanol.

On the other hand, in the case where the cellulose nanofibers 12 are used as the reinforcement material 10, a CNF dispersion is formulated by dispersing the cellulose nanofibers 12 in ethanol. In this case, it is preferred to formulate the CNF dispersion such that there is no aggregation which, during thin film production, would cause a defect in the film.

By mixing the oxyethylene chain-containing polymer solution described above with the CNT dispersion or the CNF dispersion, the oxyethylene chain-containing polymer-reinforcement material-containing solution that contains the oxyethylene chain-containing polymer and the reinforcement material 10 is formulated. Note that "the step of formulating a polymer material-containing solution that contains a polymer material which has selective permeability for a predetermined gas when formed into a thin film" is the same as the first step described in the first embodiment, and thus, description thereof is omitted.

### <Second Step>

The second step is a step of forming the second polymer thin film 3 by applying the oxyethylene chain-containing polymer-reinforcement material-containing solution onto a base material formed with a sacrificial layer such that the oxyethylene chain-containing polymer-reinforcement material-containing solution covers the sacrificial layer. Similarly to the second step of the first embodiment, a sacrificial layer composed of PSS is formed on the base material. Next, the oxyethylene chain-containing polymer-reinforcement material-containing solution that has been prepared in the first step is applied so as to cover the sacrificial layer, whereby the second polymer thin film 3 is formed. Thereafter, the second polymer thin film 3 is placed still in N₂ atmosphere for about 30 minutes.

By adopting spin coating when applying the oxyethylene chain-containing polymer-reinforcement material-containing solution, strong external force acts on the reinforcement material 10 contained in the solution, the carbon nanotubes 11 or the cellulose nanofibers 12 included in the reinforcement material 10 cannot configure a tube (fiber) network three-dimensionally, namely, in the thickness direction of the membrane. As a result, the reinforcement material 10 is carried along with the solvent (here, ethanol) and is arranged on a flat plane, whereby a substantially two-dimensional tube (fiber) network (the aforementioned low-density network) is formed.

### <Third Step to Fifth Step>

The third step is a step of cross-linking the second polymer thin film 3, the fourth step is a step of forming the first polymer thin film 2 by applying and curing the polymer material-containing solution so as to cover the second polymer thin film 3 after cross-linking, and the fifth step is a step of peeling off the polymer composite thin film 1 composed of the first polymer thin film 2 and the second polymer thin film 3 from the base material by dissolving the sacrificial layer. These steps are the same as the third step to the fifth step described in the first embodiment, and thus, description thereof is omitted. Then, by transferring the polymer composite thin film 1 that has been peeled off from the base material onto the support body 5, the gas separation body 6 is obtained. As described in the first embodiment, when transferring, configuration may be made such that the first polymer thin film 2 contacts the support body 5 at the time of transfer or configuration may be made such that the second polymer thin film 3 contacts the support body 5.

### Example 11

By dissolving 1g of P(PEGMA) powder and 0.01g of the photopolymerization initiator in ethanol, an oxyethylene chain-containing polymer solution with the content of P(PEGMA) being 0.01 g/mL and the content of the photopolymerization initiator being 0.0001 g/mL was formulated. Further, by adding a CNT dispersion to the oxyethylene chain-containing polymer solution, an oxyethylene chain-containing polymer-reinforcement material-containing solution that contained 0.00003 g/mL of carbon nanotubes 11 was formulated. Apart from this, a PDMS formulation liquid was formulated as in Example 1.

Next, as in Example 1, a sacrificial layer was formed on the base material by using PSS. Further, on the base material formed with the sacrificial layer, the oxyethylene chain-containing polymer-reinforcement material-containing solution made by the above-described operation was applied by spin coating. The base material onto which the oxyethylene chain-containing polymer-reinforcement material-containing solution has been applied was placed still in N₂ atmosphere for 30 minutes.

Thereafter, by performing UV irradiation in the same atmosphere, the oxyethylene chain-containing polymer-reinforcement material-containing layer was cross-linked to form the second polymer thin film 3. Note that in Example 4 also, by controlling the UV irradiation time, the progress of cross-linking was stopped while the second polymer thin film 3 was in the rubber state.

Next, the PDMS formulation liquid made by the above-described operation was applied by spin coating (3000 rpm / 1 minute) so as to cover the second polymer thin film 3. Thereafter, the base material was placed still in the atmospheric air for one day, whereby PDMS was cured and the first polymer thin film 2 was formed.

Next, the polymer composite thin film 1 was peeled off from the base material by immersing the base material in water and dissolving the sacrificial layer. Then, as in Example 1, the polymer composite thin film 1 was transferred onto the support body 5 in the manner that the first polymer thin film 2 of the polymer composite thin film 1 contacted the support body 5, whereby the gas separation body 6 was obtained.

### Example 12

With the exception that an oxyethylene chain-containing polymer-reinforcement material-containing solution that contained 0.000015 g/mL of carbon nanotubes 11 was used, the polymer composite thin film 1 and the gas separation body 6 were formed under the same conditions as in Example 11.

### Example 13

With the exception that an oxyethylene chain-containing polymer-reinforcement material-containing solution that contained 0.0000039 g/mL of carbon nanotubes 11 was used, the polymer composite thin film 1 and the gas separation body 6 were formed under the same conditions as in Example 11.

### Example 14

By dissolving 0.5g of P(PEGMA) powder and 0.005g of the photopolymerization initiator in ethanol, an oxyethylene chain-containing polymer solution with the concentration of P(PEGMA) being 0.03 g/mL and the content of the photopolymerization initiator being 0.0003 g/mL was formulated. Further, by adding a CNF dispersion to the oxyethylene chain-containing polymer solution, an oxyethylene chain-containing polymer-reinforcement material-containing solution that contained 0.00024 g/mL of cellulose nanofibers 12 was formulated. Apart from this, a PDMS formulation liquid was formulated as in Example 1.

Next, as in Example 1, a sacrificial layer was formed on the base material by using PSS, and as in Example 11, the second polymer thin film 3 was formed on the sacrificial layer by using the oxyethylene chain-containing polymer-reinforcement material-containing solution, where the progress of cross-linking was stopped while this was in the rubber state. Further, by using the PDMS formulation liquid, the first polymer thin film 2 was formed so as to cover the second polymer thin film 3. Next, the polymer composite thin film 1 composed of the second polymer thin film 3 and the first polymer thin film 2 was peeled off from the sacrificial layer. Then, in the same manner as in Example 1, the polymer composite thin film 1 was transferred onto the support body 5, whereby the gas separation body 6 was obtained.

In the following, [Table 3] shows, regarding Example 11 to Example 14, presence or absence of self-supporting property, the film thickness of the first polymer thin film 2, the film thickness of the second polymer thin film 3, the reinforcement material 10 added to the second polymer thin film 3, the amount of reinforcement material 10 added, the CO₂ permeance, the N₂ permeance, the O₂ permeance, and the selection ratios CO₂/N₂, O₂/N₂, and CO₂/O₂. In [Table 3], data of the comparative example is also shown.

**[Table 3]**

| | **self-supporting property** | **film thickness of first polymer thin film 2 [nm]** | **film thickness of second polymer thin film 3 [nm]** | **reinforcement material 10 added to second polymer thin film 3** | **amount of reinforcement material 10 added [g/mL]** | **CO2 permeance [GPU]** | **N2 permeance [GPU]** | **O2 permeance [GPU]** | **selection ratio CO2/N2** | **selection ratio O2/N2** | **selection ratio CO2/O2** |
|---|---|---|---|---|---|---|---|---|---|---|---|
| **Example 11** | Yes | 120~150 | 38 | CNT | 0.000030 | 7963 | 156 | 484 | 51.0 | 3.1 | 16.5 |
| **Example 12** | Yes | 120~150 | 38 | CNT | 0.000015 | 10378 | 200 | 567 | 51.9 | 2.8 | 18.3 |
| **Example 13** | Yes | 120~150 | 38 | CNT | 0.0000039 | 11074 | 257 | 674 | 43.1 | 2.6 | 16.4 |
| **Example 14** | Yes | 120~150 | 74 | CNF | 0.00024 | 3586 | 94 | 218 | 38.1 | 2.3 | 16.4 |
| **Comparative Example (PDMS thin film)** | Yes | 150 | - | - | - | 10662 | 981 | 2075 | 10.9 | 2.1 | 5.1 |

As shown in [Table 3], the polymer composite thin films 1 in Example 11 to Example 14 each have a self-supporting property. In each example, the thickness of the first polymer thin film 2 that contains PDMS is substantially the same as that of the PDMS thin film of the comparative example, and it may be considered that the polymer composite thin films 1 in Example 11 to Example 14 have a structure in which the second polymer thin film 3 that contains the reinforcement material 10 is superimposed on the PDMS thin film of the comparative example.

By superimposing the second polymer thin film 3 on the first polymer thin film 2, the entire film thickness also increases, and due to this, the CO₂, N₂, and O₂ permeances are lowered in Example 11 and Example 14 than the comparative example. On the other hand, in Example 12 and Example 13, the CO₂ permeance exceeds 10000 GPU, achieving values comparable to that of the comparative example. Further, it is seen that the gas selectivity CO₂/N₂ is considerably improved than the comparative example, and O₂/N₂ is also improved.

Here, in Example 11 to Example 13, the carbon nanotubes 11 are added to the second polymer thin film 3. When these are compared to Example 1 to Example 3 (where the second polymer thin film 3 does not contain the reinforcement material 10), the film thickness of the second polymer thin film 3 is 38 nm in Example 11 to Example 13, while the film thickness of the second polymer thin film 3 is 113 nm to 74 nm in Example 1 to Example 3. Namely, in Example 11 to Example 13, by adding the carbon nanotubes 11 to the second polymer thin film 3 as the reinforcement material 10, the mechanical strength is improved, and the second polymer thin film 3 (and as a result, the polymer composite thin film 1) can be made thinner.

Also, in Example 14, the cellulose nanofibers 12 are added to the second polymer thin film 3. The film thickness of the second polymer thin film 3 in Example 14 is 74 nm, and this is the same as the film thickness of the second polymer thin film 3 in Example 3. It is considered that the cellulose nanofibers 12 added to the second polymer thin film 3 function as a barrier and thereby the CO₂ permeance is lowered (5459 GPU in Example 3, and 3586 GPU in Example 14), but it is obvious that the cellulose nanofibers 12 improve the mechanical strength of the second polymer thin film 3, and the configuration of Example 14 can be preferably used in such cases as when the air pressure difference between the upstream and downstream of the gas separation body 6 is large, for example.

### (Third Embodiment)

Figure 2(b) is an explanatory diagram showing the configuration of a polymer composite thin film 1 according to the third embodiment of the present invention and a gas separation body 6 including the polymer composite thin film 1. In the third embodiment, the components of the gas separation body 6 are the same as in the first embodiment, but the third embodiment differs from the first embodiment and the second embodiment in that in the third embodiment, reinforcement material 10 is dispersed in the first polymer thin film 2. Similarly to the second embodiment, as the reinforcement material 10, CNTs or CNFs can be preferably used. The first polymer thin film 2 in which CNTs or CNFs are dispersed exhibits very high mechanical strength. Particularly, by selecting CNTs or CNFs having diameters smaller than the film thickness of the first polymer thin film 2, the functionality of the first polymer thin film 2 is sufficiently exerted. Note that, in the first polymer thin film 2 also, the reinforcement material 10 constitutes a low-density network described above.

In the following, a manufacturing process for the polymer composite thin film 1 according to the third embodiment and the gas separation body 6 provided with the polymer composite thin film 1 will be described.

### <First Step>

The first step is a step of preparing an oxyethylene chain-containing polymer solution that contains an oxyethylene chain and preparing a polymer material-reinforcement material-containing solution that contains polymer material which has selective permeability for a predetermined gas when formed into a thin film and reinforcement material 10.

As in the first step of the first embodiment, a photopolymerization initiator in an amount of 1 wt% relative to P(PEGMA) is added to the powder of P(PEGMA), and this is dissolved in a predetermined amount of ethanol, whereby the oxyethylene chain-containing polymer solution is prepared.

In the same way as in the second embodiment, a CNT dispersion (or a CNF dispersion) and a polymer material-containing solution (PDMS formulation liquid) are prepared. By mixing the polymer material-containing solution described above with the CNT dispersion or the CNF dispersion, the polymer material-reinforcement material-containing solution that contains the polymer material (here, PDMS) and the reinforcement material 10 is formulated.

### <Second Step, Third Step>

The second step is a step of forming the second polymer thin film 3 by applying the oxyethylene chain-containing polymer solution onto a base material formed with a sacrificial layer such that the oxyethylene chain-containing polymer solution covers the sacrificial layer. Also, the third step is a step of cross-linking the second polymer thin film 3. The second step and the third step are the same as in the first embodiment, and thus, description thereof is omitted.

### <Fourth Step>

The fourth step is a step of forming the first polymer thin film 2 by applying and curing the polymer material-reinforcement material-containing solution so as to cover the second polymer thin film 3 after cross-linking. The polymer material-reinforcement material-containing solution prepared in the first step is applied so as to cover the second polymer thin film 3 after cross-linking. Thereafter, it is placed still in the atmospheric air for one day to cure the first polymer thin film 2.

### <Fifth Step>

The fifth step is a step of peeling off the polymer composite thin film 1 composed of the first polymer thin film 2 and the second polymer thin film 3 from the base material by dissolving the sacrificial layer. The fifth step is the same as in the first embodiment, and thus, description thereof is omitted. By transferring the polymer composite thin film 1 that has been peeled off from the base material onto the support body 5, the gas separation body 6 is obtained.

### Example 15

As in Example 11, an oxyethylene chain-containing polymer solution with the content of P(PEGMA) being 0.01 g/mL and the content of the photopolymerization initiator being 0.0001 g/mL was formulated. Apart from this, a PDMS formulation liquid was formulated as in Example 1. Further, by adding a CNT dispersion to the PDMS formulation liquid, a polymer material-reinforcement material-containing solution that contained 0.000015 g/mL of carbon nanotubes 11 was formulated.

Next, as in Example 1, a sacrificial layer was formed on the base material by using PSS. Further, on the base material formed with the sacrificial layer, the oxyethylene chain-containing polymer solution made by the above-described operation was applied by spin coating. The base material on which the oxyethylene chain-containing polymer solution had been applied was placed still in N₂ atmosphere for 30 minutes. Thereafter, by performing UV irradiation in the same atmosphere, the oxyethylene chain-containing polymer was cross-linked to form the second polymer thin film 3.

Next, the polymer material-reinforcement material-containing solution made by the above-described operation was applied by spin coating (3000 rpm / 1 minute) so as to cover the second polymer thin film 3. Thereafter, the base material was placed still in the atmospheric air for one day, whereby the polymer material-reinforcement material-containing solution was cured to form the first polymer thin film 2. Next, the polymer composite thin film 1 was peeled off from the base material by immersing the base material in water and dissolving the sacrificial layer. Then, in the same manner as in Example 1, the polymer composite thin film 1 placed on the support body 5, whereby the gas separation body 6 was obtained.

### Example 16

As in Example 3, an oxyethylene chain-containing polymer solution with the content of P(PEGMA) being 0.03 g/mL and the content of the photopolymerization initiator being 0.0003 g/mL was formulated. Apart from this, a PDMS formulation liquid was formulated as in Example 1. Further, by adding a CNF dispersion to the PDMS formulation liquid, a polymer material-reinforcement material-containing solution that contained 0.0000004 g/mL of cellulose nanofibers 12 was formulated. With the other conditions being the same as in Example 15, the polymer composite thin film 1 and the gas separation body 6 were obtained.

### Example 17

With the exception that an oxyethylene chain-containing polymer solution with the content of P(PEGMA) being 0.01 g/mL and the content of the photopolymerization initiator being 0.0001 g/mL was used as the oxyethylene chain-containing polymer solution, the polymer composite thin film 1 and the gas separation body 6 were obtained in the same way as in Example 16.

In the following, [Table 4] shows, regarding Example 15 to Example 17, presence or absence of self-supporting property, the film thickness of the first polymer thin film 2, the film thickness of the second polymer thin film 3, the reinforcement material 10 added to the first polymer thin film 2, the amount of reinforcement material 10 added, the CO₂ perme-ance, the N₂ permeance, the O₂ permance, and the selection ratios CO₂/N₂, O₂/N₂, and CO₂/O₂. In [Table 4], data of the comparative example is also shown.

**[Table 4]**

| | **self-supporting property** | **film thickness of first polymer thin film 2 [nm]** | **film thickness of second polymer thin film 3 [nm]** | **reinforcement material 10 added to first polymer thin film 2** | **amount of reinforcement material 10 added [g/mL]** | **CO2 permeance [GPU]** | **N2 permeance [GPU]** | **O2 permeance [GPU]** | **selection ratio CO2/N2** | **selection ratio O2/N2** | **selection ratio CO2/O2** |
|---|---|---|---|---|---|---|---|---|---|---|---|
| **Example 15** | Yes | 120~150 | 38 | CNT | 0.000015 | 3353 | 65 | 209 | 51.6 | 3.2 | 16.0 |
| **Example 16** | Yes | 120~150 | 74 | CNF | 0.0000004 | 4174 | 104 | 253 | 40.1 | 2.4 | 16.5 |
| **Example 17** | Yes | 120~150 | 38 | CNF | 0.0000004 | 6562 | 161 | 399 | 40.8 | 2.5 | 16.4 |
| **Comparative Example (PDMS thin film)** | Yes | 150 | - | - | - | 10662 | 981 | 2075 | 10.9 | 2.1 | 5.1 |

As shown in [Table 4], the polymer composite thin films 1 in Example 15 to Example 17 each have a self-supporting property. In each example, the thickness of the first polymer thin film 2 that contains PDMS is substantially the same as that of the PDMS thin film of the comparative example, and it may be considered that the polymer composite thin films 1 in Example 15 to Example 17 have a structure in which the reinforcement material 10 is added to the PDMS thin film of the comparative example and the second polymer thin film 3 is superimposed thereon.

By superimposing the second polymer thin film 3 on the first polymer thin film 2 that contains PDMS and the reinforcement material 10, the entire film thickness also increases, and due to this, the CO₂, N₂, and O₂ permeances are lowered in Example 15 to Example 17 than in the comparative example. On the other hand, it is seen that the gas selectivity CO₂/N₂ is considerably improved than the comparative example, and O₂/N₂ is also improved.

Here, in Example 15, the carbon nanotubes 11 are added to the first polymer thin film 2, and in Example 17, the cellulose nanofibers 12 are added to the first polymer thin film 2. Compared to Example 1 to Example 3 (where the first polymer thin film 2 does not contain the reinforcement material 10), the film thickness of the second polymer thin film 3 is 38 nm in Example 15 and Example 17, while the film thickness of the second polymer thin film 3 is 113 nm to 74 nm in Example 1 to Example 3. Namely, in Example 15 and Example 17, by supporting the second polymer thin film 3 with the first polymer thin film 2 that contains the reinforcement material 10, the entire mechanical strength is improved, and the second polymer thin film 3 (and as a result, the polymer composite thin film 1) can be made thinner.

### (Fourth Embodiment)

Figure 2(c) is an explanatory diagram showing the configuration of a polymer composite thin film 1 according to the fourth embodiment of the present invention and a gas separation body 6 including the polymer composite thin film 1. In the fourth embodiment, the gas separation body 6 is composed of the polymer composite thin film 1 and the support body 5. The polymer composite thin film 1 is composed of the first polymer thin film 2, the reinforcement layer 4, and the second polymer thin film 3, where the reinforcement layer 4 is provided between the first polymer thin film 2 and the second polymer thin film 3. Here, the reinforcement layer 4 is composed of reinforcement material 10 such as carbon nanotubes 11 or cellulose nanofibers 12. Namely, the fourth embodiment differs from the other embodiments in that in the fourth embodiment, the reinforcement layer 4 composed of the reinforcement material 10 is independently provided. The carbon nanotubes 11 and the cellulose nanofibers 12 have high mechanical strength as a material, and the reinforcement layer 4 composed of them exhibits very high mechanical strength, and as a result, improves the strength of the polymer composite thin film 1 as a whole. Note that in the reinforcement layer 4 also, the reinforcement material 10 constitutes a low-density network described above.

In the fourth embodiment, the configurations of the first polymer thin film 2, the second polymer thin film 3, and the support body 5 are the same as in the first embodiment, and thus, description thereof is omitted. In the following, a manufacturing process for the polymer composite thin film 1 according to the fourth embodiment and the gas separation body 6 provided with the polymer composite thin film 1 will be described.

### <First Step>

The fifth step is a step of preparing a reinforcement material dispersion that contains reinforcement material 10, an oxyethylene chain-containing polymer solution that contains an oxyethylene chain, and a polymer material-containing solution that contains polymer material which has selective permeability for a predetermined gas when formed into a thin film.

As in the first step of the first embodiment, a photopolymerization initiator in an amount of 1 wt% relative to P(PEGMA) is added to the powder of P(PEGMA), and this is dissolved in a predetermined amount of ethanol, whereby the oxyethylene chain-containing polymer solution is prepared. In the same way as in the second embodiment, a CNT dispersion or a CNF dispersion (hereinafter may be collectively referred to as "the reinforcement material dispersion") and a polymer material-containing solution (PDMS formulation liquid) are prepared.

### <Second Step, Third Step>

The second step is a step of forming the second polymer thin film 3 by applying the oxyethylene chain-containing polymer solution onto a base material formed with a sacrificial layer such that the oxyethylene chain-containing polymer solution covers the sacrificial layer. Also, the third step is a step of cross-linking the second polymer thin film 3. The second step and the third step are the same as in the first embodiment, and thus, description thereof is omitted.

### <Fourth Step>

The fourth step is a step of forming the reinforcement layer 4 by applying the reinforcement material dispersion so as to cover the second polymer thin film 3 after cross-linking. When forming the reinforcement layer 4, the reinforcement material dispersion prepared in the first step is applied so as to cover the second polymer thin film 3 after cross-linking.

### <Fifth Step>

The fifth step is a step of forming the first polymer thin film 2 by applying and curing the polymer material-containing solution so as to cover the reinforcement layer 4. The polymer material-containing solution (PDMS formulation liquid) prepared in the first step is applied so as to cover the reinforcement layer 4, whereby the first polymer thin film 2 is formed. Thereafter, the first polymer thin film 2 is placed still in the atmospheric air for one day to cure the first polymer thin film 2.

### <Sixth Step>

The sixth step is a step of peeling off the polymer composite thin film 1 from the base material by dissolving the sacrificial layer. On the base material, the sacrificial layer, the second polymer thin film 3, the reinforcement layer 4, and the first polymer thin film 2 are formed in order of closest to the base material, and these constitute the polymer composite thin film 1. By immersing the base material in water and dissolving the sacrificial layer in water, the polymer composite thin film 1 is peeled off from the base material. Then, by transferring the polymer composite thin film 1 that has been peeled off from the base material onto the support body 5, the gas separation body 6 is obtained.

Note that in the fourth embodiment, the polymer composite thin film 1 may be formed by forming the reinforcement layer 4 (fourth step) after forming the sacrificial layer, thereafter forming the second polymer thin film 3 by applying the oxyethylene chain-containing polymer solution so as to cover the reinforcement layer 4 and cross-linking the second polymer thin film 3 (second step and third step), and further forming the first polymer thin film 2 by applying the PDMS formulation liquid so as to cover the second polymer thin film 3 (fifth step). The gas separation body 6 may be configured such that the reinforcement layer 4 constituting the polymer composite thin film 1 contacts the support body 5 or the gas separation body 6 may be configured such that the first polymer thin film 2 contacts the support body 5.

### Example 18

As in Example 11, an oxyethylene chain-containing polymer solution with the content of P(PEGMA) being 0.01 g/mL and the content of the photopolymerization initiator being 0.0001 g/mL was formulated. Apart from this, a PDMS formulation liquid was formulated as in Example 1. Further, a reinforcement material dispersion that contained 0.00003 g/mL of carbon nanotubes 11 was formulated.

Next, as in Example 1, a sacrificial layer was formed on the base material by using PSS. Further, on the base material formed with the sacrificial layer, the oxyethylene chain-containing polymer solution made by the above-described operation was applied by spin coating (3000 rpm, 1 minute). Then, the base material on which the oxyethylene chain-containing polymer solution had been applied was placed still in N₂ atmosphere for 30 minutes. Thereafter, by performing UV irradiation in the same atmosphere, P(PEGMA) was cross-linked to form the second polymer thin film 3.

Next, the reinforcement material dispersion made by the above-described operation was applied by spin coating (3000 rpm / 1 minute) so as to cover the second polymer thin film 3, whereby the reinforcement layer 4 was formed. Next, the PDMS formulation liquid made by the above-described operation was applied by spin coating (3000 rpm / 1 minute) so as to cover the reinforcement layer 4. Thereafter, the base material was placed still in the atmospheric air for one day, whereby PDMS was cured and the first polymer thin film 2 was formed. In this way, the sacrificial layer and the polymer composite thin film 1 were formed on the base material.

Next, the polymer composite thin film 1 was peeled off from the base material by immersing the base material in water and dissolving the sacrificial layer. Then, the polymer composite thin film 1 was transferred onto the support body 5 in the manner that the first polymer thin film 2 of the polymer composite thin film 1 contacted the support body 5, whereby the gas separation body 6 was obtained. Note that when the cross section of the polymer composite thin film 1 was observed by SEM, the reinforcement layer 4 could not be clearly identified.

### Example 19

With the exception that a reinforcement material dispersion that contained 0.000015 g/mL of carbon nanotubes 11 was used, the polymer composite thin film 1 and the gas separation body 6 were formed under the same conditions as in Example 18. In Example 19 also, the reinforcement layer 4 could not be clearly identified in the SEM observation of the cross section of the polymer composite thin film 1.

### Example 20

With the exception that a reinforcement material dispersion that contained 0.0006 g/mL of cellulose nanofibers 12 was used, the polymer composite thin film 1 and the gas separation body 6 were formed under the same conditions as in Example 18. In Example 20 also, when the cross section of the polymer composite thin film 1 was observed by SEM, the reinforcement layer 4 could not be clearly identified.

In the following, [Table 5] shows, regarding Example 18 to Example 20, presence or absence of self-supporting property, the film thickness of the first polymer thin film 2, the film thickness of the second polymer thin film 3, the material composing the reinforcement layer 4, the amount of reinforcement material 10 added, the CO₂ permeance, the N₂ permeance, the O₂ permeance, and the selection ratios CO₂/N₂, O₂/N₂, and CO₂/O₂. In [Table 5], data of the comparative example is also shown.

**[Table 5]**

| | **self-supporting property** | **film thickness of first polymer thin film 2 [nm]** | **film thickness of second polymer thin film 3 [nm]** | **material composing reinforcement layer 4** | **amount of reinforcement material 10 added [g/mL]** | **CO2 permeance [GPU]** | **N2 permeance [GPU]** | **O2 permeance [GPU]** | **selection ratio CO2/N2** | **selection ratio O2/N2** | **selection ratio CO2/O2** |
|---|---|---|---|---|---|---|---|---|---|---|---|
| **Example 18** | Yes | 120∼150 | 38 | CNT | 0.000030 | 4538 | 88 | 263 | 51.6 | 3.0 | 17.3 |
| **Example 19** | Yes | 120∼150 | 38 | CNT | 0.000015 | 7298 | 146 | 423 | 50.0 | 2.9 | 17.3 |
| **Example 20** | Yes | 120~150 | 74 | CNF | 0.0006 | 3952 | 136 | 253 | 29.1 | 1.9 | 15.6 |
| **Comparative Example (PDMS thin film)** | Yes | 150 | - | - | - | 10662 | 981 | 2075 | 10.9 | 2.1 | 5.1 |

As shown in [Table 5], the polymer composite thin films 1 of Example 18 to Example 20 each have a self-supporting property. In each example, the thickness of the first polymer thin film 2 that contains PDMS is substantially the same as that of the PDMS thin film of the comparative example, and it may be considered that the polymer composite thin films 1 in Example 18 to Example 20 have a structure in which the reinforcement material 10 is unevenly distributed on one surface of the PDMS thin film of the comparative example and the second polymer thin film 3 is superimposed thereon.

By superimposing the second polymer thin film 3 on the first polymer thin film 2 that contains PDMS and the reinforcement material 10, the entire film thickness also increases, and due to this, the CO₂, N₂, and O₂ permeances are lowered in Example 18 to Example 20 than in the comparative example. On the other hand, it is seen that the gas selectivity CO₂/N₂ is considerably improved than the comparative example, and O₂/N₂ is also improved except for Example 20.

Here, in Example 18 and Example 19, the reinforcement layer 4 is composed of carbon nanotubes 11, and in Example 20, the reinforcement layer 4 is composed of cellulose nanofibers 12. Compared to Example 1 to Example 3 (where neither the first polymer thin film 2 nor the second polymer thin film 3 contains the reinforcement material 10), the film thickness of the second polymer thin film 3 is 38 nm in Example 18 and Example 19, while the film thickness of the second polymer thin film 3 is 113 nm to 74 nm in Example 1 to Example 3. Namely, in Example 18 and Example 19, by supporting the second polymer thin film 3 with the first polymer thin film 2 that includes the reinforcement layer 4, the entire mechanical strength is improved, and the second polymer thin film 3 (as a result, the polymer composite thin film 1) can be made thinner.

Note that in the gas separation bodies 6 according to the second embodiment to the fourth embodiment also, when the gas was caused to permeate in order from the second polymer thin film 3 to the first polymer thin film 2, the gas selectivity was superior, while when the gas was caused to permeate in order from the first polymer thin film 2 to the second polymer thin film 3, the gas permeability was superior, similarly to what was described in the first embodiment (Example 7 to Example 10).

As described above, in the first embodiment to the fourth embodiment, due to the configuration in which two polymer thin films having different properties are combined, or in which the reinforcement material 10 is further combined (composited), or in which the reinforcement layer 4 is combined, the polymer composite thin film 1 provided with a good balance of gas permeability and gas selectivity is realized.

### (Fifth Embodiment)

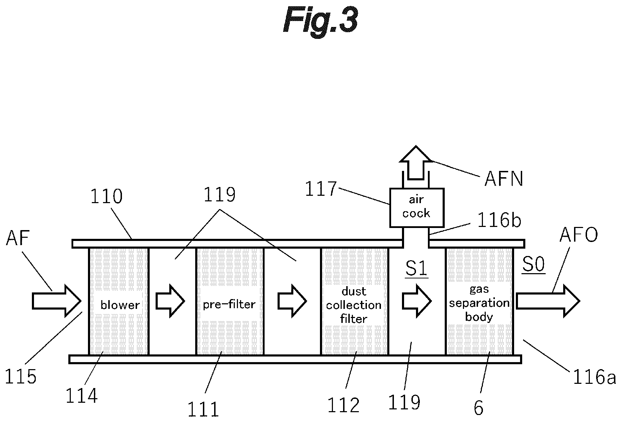

Figure 3 is an explanatory diagram showing the configuration of a gas separation device 110 provided with a gas separation body 6 according to the present invention. As shown in Figure 3, the gas separation device 110 is composed of a blower 114, a pre-filter 111, a dust collection filter 112, and a gas separation body 6, and a flow path 119 for the air is formed from a suction port 115 to a first discharge port 116a (and a second discharge port 116b).

The blower 114 is composed of an air compressor, for example. By driving the blower 114, the air suctioned from the suction port 115 passes through the flow path 119 as an air flow AF in the order of the pre-filter 111, the dust collection filter 112, and the gas separation body 6.

The air that permeates the gas separation body 6 is discharged, as an air flow AFO, from the first discharge port 116a provided downstream of the gas separation body 6. On the other hand, the air that does not permeate the gas separation body 6 is discharged, as an air flow AFN, from the second discharge port 116b provided upstream of the gas separation body 6.

Here, to perform gas separation, an air pressure difference is necessary between an upstream space (first space S1) and a downstream space (here, an external space S0) that interpose the gas separation body 6 therebetween. In the gas separation device 110 of the fifth embodiment, to ensure the air pressure difference, an air cock 117 is connected to the second discharge port 116b to limit the amount of outflow of the air flow AFN, while the blower 114 sends out compressed air such that the first space S1 is adjusted to have a positive pressure with respect to the external space S0 (1 atm). Note that when the polymer composite thin film 1 installed in the gas separation body 6 has high permeance, the air pressure in the first space S1 may be set to a moderate value such as about 2 atm (the air pressure difference between the first space S1 and the external space S0 = 1 atm), for example. Further, since the polymer composite thin film 1 according to the present invention has very high gas selectivity, it can efficiently separate the gas even if the air pressure difference between the front and rear of the gas separation body 6 is small.

Also, since the polymer composite thin film 1 according to the present invention (particularly, the second embodiment to the fourth embodiment) is configured to contain the reinforcement material 10, the polymer composite thin film 1 has very high mechanical strength. Therefore, it is possible to set the air pressure difference between the first space S1 and the external space S0 to a high value such as about 10 atm.

The pre-filter 111 is a filter through which the air suctioned by the blower 114 first passes, and catches relatively large dust contained in the air flow AF. The dust collection filter 112 is a filter through which the air that has passed through the pre-filter 111 passes next and, for example, an HEPA (High Efficiency Particulate Air) filter is preferably used.

The gas separation body 6 is internally provided with the polymer composite thin film 1 described with respect to the first embodiment to the fourth embodiment. The gas supplying unit (here, the blower 114) supplies the gas so that the gas permeates in the order of the second polymer thin film 3 and the first polymer thin film 2 (or in the order of the first polymer thin film 2 to the second polymer thin film 3). Thereby, the user of the gas separation device 110 can select the configuration of the gas separation body 6 superior in gas selectivity or gas permeability to obtain oxygen enriched air, carbon dioxide concentrated air, and nitrogen enriched air.

As shown in [Table 1] to [Table 5], the polymer composite thin film 1 according to the present invention has higher permeance for CO₂ and O₂ compared to N₂, and thus, in the air flow AFO discharged from the first discharge port 116a after passing through the gas separation body 6, the concentrations of O₂ and CO₂ are higher than in the normal air (namely, oxygen enriched air, carbon dioxide concentrated air). On the other hand, in the air flow AFN discharged from the second discharge port 116b without passing through the gas separation body 6, the concentration of nitrogen is higher than in the normal air(namely, nitrogen enriched air).

Since CO₂ in the air is concentrated in the air flow AFO, the gas separation device 110 can function as a CO₂ capture device that captures carbon dioxide concentrated air. Here, in the gas separation body 6, the polymer composite thin film 1 may be provided in multiple stages in series to form a multistage configuration. Here, provided that the O₂/N₂ selection ratio of the single polymer composite thin film 1 is 2.2 and the number of stages of the polymer composite thin films 1 is P, the O₂/N₂ selection ratio of the gas separation body 6 as a whole becomes 2.2^P, and it becomes possible to increase the oxygen concentration by increasing the number of stages. Of course, when P is increased, the total gas permeance of the gas separation body 6 is lowered. In this case, the problem can be dealt with by increasing the capacity of the air compressor constituting the blower 114.

Note that the present inventors have reported, in "Polymer Journal (2021) 53: 111-119 A new strategy for membrane-based direct air capture," for example, that it is possible to concentrate CO₂ in the air (0.04 %) to 40 % or more by employing the multistage configuration of the polymer thin film in the gas separation body 6. The gas separation device 110 with multistaged polymer thin films can be introduced in a variety of sizes and scales, and can be new CO₂ capture technology (DAC). The polymer composite thin film 1 according to the present invention has high permeability, very high gas selectivity, and very high mechanical strength, and thus, is very useful in concentrating and capturing CO₂ and O₂ in the air.

Further, the air flow AFO can be utilized in farms of fish or the like, oxygen combustion power plants, oxygen combustion boilers, etc. that use oxygen enriched air. Note that in the air flow AFO, the CO₂ concentration is also increased, but by causing it pass through activated carbon, water or the like, for example, it is relatively easy to remove CO₂ from the air flow AFO, and it is possible to obtain a large amount of oxygen enriched air in which the increase of CO₂ concentration is suppressed.

On the other hand, the air flow AFN can be used for fire extinguishing purposes, for example. Combustion requires three elements; a combustible material, an oxygen supplier, and an ignition source, and in the air, combustion of combustible materials cannot continue unless the oxygen concentration is higher than or equal to the critical oxygen concentration. By making the nitrogen concentration exceed 85 % (or making the oxygen concentration be lower than 14 %), combustion can be suppressed for most combustible materials. Further, the air flow AFN (nitrogen enriched air) can be used in a corrosion/putrefaction prevention system (storage system) for preventing deterioration of food, artwork, etc. due to oxidation or the like.

Also, in thermal power generation plants or the like in which fossil fuel such as coal, oil, and LNG gas is combusted in the boiler and the turbine is rotated with the steam generated by the heat of combustion, thereby to generate electricity, it is possible to use the air flow AFO (oxygen enriched air) in usual time to improve the combustion efficiency, and in a case where the temperature of the boiler or the like becomes abnormally high due to malfunction or the like, to supply the air flow AFN (nitrogen enriched air) to prevent fire.

Note that as the air flow AFO, not only the air described above but also exhaust gas of the internal combustion engine or other mixture gas may be used, for example. In this case also, carbon dioxide concentration, oxygen enrichment, and nitrogen enrichment can be performed for the exhaust gas or other mixture gas.

Incidentally, among polysiloxanes, PDMS is particularly known for having a large ratio of free volume (free volume). The cavity radius (cavity radius) in the polymer actually estimated by positron annihilation spectroscopy is 1 nm or less (see Yampolskii, Pinnau, Freeman, 2006 John Wiley & Sons, Ltd "Materials Science of Membranes for Gas and Vapor Separation" p.125). Therefore, it is difficult for so-called nano particles exceeding this size to permeate the PDMS membrane, and the air flow AFO becomes clean air that does not contain even nanoparticles.

As described above, the gas separation device 110 provided with the polymer composite thin film 1 according to the present invention has, in addition to high permeance, selectivity, and mechanical strength, a function of removing nano-sized fine particles that cannot be removed by the dust collection filter 112 described above, and thus, by applying the polymer composite thin film 1, it becomes possible to realize a cleanroom system (air purifier) with a very high degree of cleanliness.

In the foregoing, the polymer composite thin film 1 and the gas separation device 110 according to the present invention have been described in terms of specific embodiments or examples, but they are only for illustrative purposes, and the present invention is not limited by these embodiments and examples.

### INDUSTRIAL APPLICABILITY

The polymer composite thin film 1 according to the present invention has high gas permeability / gas selectivity and high mechanical strength, and the gas separation device 110 provided with the polymer composite thin film 1 has high gas separation properties, and therefore, they can be preferably applied to CCS (Carbon Dioxide Capture and Storage) for separating and capturing CO₂, which is a greenhouse gas generated by combustion of fossil fuel, from the generation source such as a power plant or a factory, or to DAC for directly capturing CO₂ from the air, for example.

### LIST OF REFERENCE NUMERALS

- 1: polymer composite thin film
- 2: first polymer thin film
- 3: second polymer thin film
- 4: reinforcement layer
- 5: support body
- 6: gas separation body
- 10: reinforcement material
- 11: carbon nanotube
- 12: cellulose nanofiber
- 110: gas separation device
- 114: blower

## Claims

1. A polymer composite thin film composed of:
a first polymer thin film having selective permeability for a predetermined gas; and
a second polymer thin film that is provided to overlap the first polymer thin film and contains at least an oxyethylene chain.

2. The polymer composite thin film according to claim 1, wherein carbon nanotubes or cellulose nanofibers are dispersed in the second polymer thin film.

3. The polymer composite thin film according to claim 1, wherein carbon nanotubes or cellulose nanofibers are dispersed in the first polymer thin film.

4. The polymer composite thin film according to claim 1, comprising a reinforcement layer composed of carbon nanotubes or cellulose nanofibers between the first polymer thin film and the second polymer thin film.

5. The polymer composite thin film according to any one of claims 1 to 4, wherein the second polymer thin film is composed of a cross-linked polymer that contains the oxyethylene chain.

6. The polymer composite thin film according to claim 5, wherein the cross-linked polymer that contains the oxyethylene chain is in a partially cross-linked state.

7. The polymer composite thin film according to any one of claims 1 to 4, wherein a total of a film thickness of the first polymer thin film and a film thickness of the second polymer thin film is 20 nm to 1000 nm.

8. The polymer composite thin film according to any one of claims 1 to 4, wherein the polymer composite thin film selectively allows carbon dioxide and oxygen to permeate from air, exhaust gas, or other mixture gas.

9. The polymer composite thin film according to any one of claims 1 to 4, wherein the first polymer thin film is mainly composed of polysiloxane.

10. A gas separation body, comprising:
the polymer composite thin film according to any one of claims 1 to 4; and
a support body that supports the polymer composite thin film.

11. A gas separation device, comprising:
the gas separation body according to claim 10; and
a gas supplying unit that supplies gas to the gas separation body,
wherein the gas supplying unit supplies the gas such that the gas permeates in order of the second polymer thin film and the first polymer thin film.

12. A gas separation device, comprising:
the gas separation body according to claim 9; and
a gas supplying unit that supplies gas to the gas separation body,
wherein the gas supplying unit supplies the gas such that the gas permeates in order of the first polymer thin film and the second polymer thin film.

13. A manufacturing method for a polymer composite thin film, the manufacturing method comprising:
a first step of preparing an oxyethylene chain-containing polymer solution and preparing a polymer material-containing solution that contains polymer material which has selective permeability for a predetermined gas when formed into a thin film;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a first polymer thin film by applying and curing the polymer material-containing solution so as to cover the second polymer thin film after cross-linking; and
a fifth step of peeling off a polymer composite thin film composed of the first polymer thin film and the second polymer thin film from the base material by dissolving the sacrificial layer.

14. A manufacturing method for a polymer composite thin film, the manufacturing method comprising:
s first step of preparing an oxyethylene chain-containing polymer-reinforcement material-containing solution that contains an oxyethylene chain-containing polymer and reinforcement material and preparing a polymer material-containing solution that contains polymer material which has selective permeability for a predetermined gas when formed into a thin film;
a second step of forming a second polymer thin film by applying the oxyethylene chain-containing polymer-reinforcement material-containing solution onto a base material formed with a sacrificial layer such that the oxyethylene chain-containing polymer-reinforcement material-containing solution covers the sacrificial layer;
a third step of cross-linking the second polymer thin film;
a fourth step of forming a first polymer thin film by applying and curing the polymer material-containing solution so as to cover the second polymer thin film after cross-linking; and
a fifth step of peeling off a polymer composite thin film composed of the first polymer thin film and the second polymer thin film from the base material by dissolving the sacrificial layer.

15. A manufacturing method for a polymer composite thin film, the manufacturing method comprising:
a first step of preparing an oxyethylene chain-containing polymer solution and preparing a polymer material-reinforcement material-containing solution that contains polymer material which has selective permeability for a predetermined gas when formed into a thin film and reinforcement material;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a first polymer thin film by applying and curing the polymer material-reinforcement material-containing solution so as to cover the second polymer thin film after cross-linking; and
a fifth step of peeling off a polymer composite thin film composed of the first polymer thin film and the second polymer thin film from the base material by dissolving the sacrificial layer.

16. A manufacturing method for a polymer composite thin film, the manufacturing method comprising:
a first step of preparing a reinforcement material dispersion that contains reinforcement material, an oxyethylene chain-containing polymer solution, and a polymer material-containing solution that contains polymer material which has selective permeability for a predetermined gas when formed into a thin film;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a reinforcement layer by applying the reinforcement material dispersion so as to cover the second polymer thin film after cross-linking;
a fifth step of forming a first polymer thin film by applying and curing the polymer material-containing solution so as to cover the reinforcement layer;
a sixth step of peeling off a polymer composite thin film composed of the first polymer thin film and the second polymer thin film from the base material by dissolving the sacrificial layer.

17. The manufacturing method for a polymer composite thin film according to any one of claims 14 to 16, wherein the reinforcement material is carbon nanotubes or cellulose nanofibers.

18. The manufacturing method for a polymer composite thin film according to any one of claims 13 to 16, wherein in the third step, the second polymer thin film is cross-linked in nitrogen atmosphere.

19. The manufacturing method for a polymer composite thin film according to any one of claims 13 to 16, wherein in the third step, progress of cross-linking is stopped in a state in which functional groups contributing to cross-linking reaction remain in the second polymer thin film.

## Amended claims

### Amended claims under Art. 19.1 PCT

1. A polymer composite thin film composed of:
a first polymer thin film having selective permeability for a predetermined gas; and
a second polymer thin film that is provided to overlap the first polymer thin film and contains at least an oxyethylene chain,
wherein each of the first polymer thin film and the second polymer thin film is a non-porous body.

2. The polymer composite thin film according to claim 1, wherein carbon nanotubes or cellulose nanofibers are dispersed in the second polymer thin film.

3. The polymer composite thin film according to claim 1, wherein carbon nanotubes or cellulose nanofibers are dispersed in the first polymer thin film.

4. The polymer composite thin film according to claim 1, comprising a reinforcement layer composed of carbon nanotubes or cellulose nanofibers between the first polymer thin film and the second polymer thin film.

5. The polymer composite thin film according to any one of claims 1 to 4, wherein the second polymer thin film is composed of a cross-linked polymer that contains the oxyethylene chain.

6. The polymer composite thin film according to claim 5, wherein the cross-linked polymer that contains the oxyethylene chain is in a partially cross-linked state.

7. The polymer composite thin film according to any one of claims 1 to 4, wherein a total of a film thickness of the first polymer thin film and a film thickness of the second polymer thin film is 20 nm to 1000 nm.

8. The polymer composite thin film according to any one of claims 1 to 4, wherein the polymer composite thin film selectively allows carbon dioxide and oxygen to permeate from air, exhaust gas, or other mixture gas.

9. The polymer composite thin film according to any one of claims 1 to 4, wherein the first polymer thin film contains polysiloxane.

10. A gas separation body, comprising:
the polymer composite thin film according to any one of claims 1 to 4; and
a support body that supports the polymer composite thin film.

11. A gas separation device, comprising:
the gas separation body according to claim 10; and
a gas supplying unit that supplies gas to the gas separation body,
wherein the gas supplying unit supplies the gas such that the gas permeates in order of the second polymer thin film and the first polymer thin film.

12. A gas separation device, comprising:
the gas separation body according to claim 9; and
a gas supplying unit that supplies gas to the gas separation body,
wherein the gas supplying unit supplies the gas such that the gas permeates in order of the first polymer thin film and the second polymer thin film.

13. A manufacturing method for a polymer composite thin film, the manufacturing method comprising:
a first step of preparing an oxyethylene chain-containing polymer solution and preparing a polymer material-containing solution that contains polymer material which has selective permeability for a predetermined gas when formed into a thin film;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a first polymer thin film by applying and curing the polymer material-containing solution so as to cover the second polymer thin film after cross-linking; and
a fifth step of peeling off a polymer composite thin film composed of the first polymer thin film and the second polymer thin film from the base material by dissolving the sacrificial layer.

14. A manufacturing method for a polymer composite thin film, the manufacturing method comprising:
s first step of preparing an oxyethylene chain-containing polymer-reinforcement material-containing solution that contains an oxyethylene chain-containing polymer and reinforcement material and preparing a polymer material-containing solution that contains polymer material which has selective permeability for a predetermined gas when formed into a thin film;
a second step of forming a second polymer thin film by applying the oxyethylene chain-containing polymer-reinforcement material-containing solution onto a base material formed with a sacrificial layer such that the oxyethylene chain-containing polymer-reinforcement material-containing solution covers the sacrificial layer;
a third step of cross-linking the second polymer thin film;
a fourth step of forming a first polymer thin film by applying and curing the polymer material-containing solution so as to cover the second polymer thin film after cross-linking; and
a fifth step of peeling off a polymer composite thin film composed of the first polymer thin film and the second polymer thin film from the base material by dissolving the sacrificial layer.

15. A manufacturing method for a polymer composite thin film, the manufacturing method comprising:
a first step of preparing an oxyethylene chain-containing polymer solution and preparing a polymer material-reinforcement material-containing solution that contains polymer material which has selective permeability for a predetermined gas when formed into a thin film and reinforcement material;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a first polymer thin film by applying and curing the polymer material-reinforcement material-containing solution so as to cover the second polymer thin film after cross-linking; and
a fifth step of peeling off a polymer composite thin film composed of the first polymer thin film and the second polymer thin film from the base material by dissolving the sacrificial layer.

16. A manufacturing method for a polymer composite thin film, the manufacturing method comprising:
a first step of preparing a reinforcement material dispersion that contains reinforcement material, an oxyethylene chain-containing polymer solution, and a polymer material-containing solution that contains polymer material which has selective permeability for a predetermined gas when formed into a thin film;
a second step of forming a second polymer thin film by applying the oxyethylene chain-containing polymer solution onto a base material formed with a sacrificial layer such that the oxyethylene chain-containing polymer solution covers the sacrificial layer;
a third step of cross-linking the second polymer thin film;
a fourth step of forming a reinforcement layer by applying the reinforcement material dispersion so as to cover the second polymer thin film after cross-linking;
a fifth step of forming a first polymer thin film by applying and curing the polymer material-containing solution so as to cover the reinforcement layer;
a sixth step of peeling off a polymer composite thin film composed of the first polymer thin film and the second polymer thin film from the base material by dissolving the sacrificial layer.

17. The manufacturing method for a polymer composite thin film according to any one of claims 14 to 16, wherein the reinforcement material is carbon nanotubes or cellulose nanofibers.

18. The manufacturing method for a polymer composite thin film according to any one of claims 13 to 16, wherein in the third step, the second polymer thin film is cross-linked in nitrogen atmosphere.

19. The manufacturing method for a polymer composite thin film according to any one of claims 13 to 16, wherein in the third step, progress of cross-linking is stopped in a state in which functional groups contributing to cross-linking reaction remain in the second polymer thin film.

Statement under Art. 19.1 PCT
1. Amendments
(1) In Claim 1, a recitation "wherein each of the first polymer thin film and the second polymer thin film is a non-porous body" has been added. The amendment to Claim 1 is based on paragraph 0029, etc. of the specification at the time of international filing.
(2) In Claim 9, a recitation "the first polymer thin film contains polysiloxane" has been added. The amendment to claim 9 is based on paragraph 0030, etc. of the specification at the time of international filing.

2. Remarks The invention regarding amended Claim 1 has a feature "wherein each of the first polymer thin film and the second polymer thin film is a non-porous body."
Due to this feature, in the invention according to amended Claim 1, since the first polymer thin film and the second polymer thin film do not have pores, even if they are made thin without using reinforcement material such as carbon nanotubes, they are not dragged into the pores each other, and a technical effect that high gas permeance and selectivity can be obtained is exerted.
In contrast to this, the aforementioned feature and the technical effect thereof are not disclosed in Documents 1-3 cited in the Written Opinion of the International Searching Authority. Particularly, it is described that the support layer of Document 1 has an average pore diameter of 20 nm to 90 nm, and in the membrane prepared without carbon nanotubes, the suction on the permeate side dragged the selective layer into the pores of the nanoporous substrate, and the performance was deteriorated (paragraphs 0007 and 0153 of Document 1).
As discussed above, the invention according to amended Claim 1 recites a feature not disclosed in the documents cited in the Written Opinion of the International Searching Authority, thereby exhibiting a technical effect not disclosed in these documents. Thus, the invention according to amended Claim 1 possesses novelty and inventive step. Similarly, the invention according to Claims 2-12 which depend from amended Claim 1 and the invention according to Claims 13-19 which have a similar technical feature as amended Claim 1 possess novelty and inventive step.
